# EUROPEAN PATENT SPECIFICATION

(11) **EP 1 887 915 B1**
(45) Date of publication and mention of the grant of the patent: **25.02.2009**
(21) Application number: 06742732.8
(22) Date of filing: 28.04.2006
(51) Int. Cl.: A47J 37/06

(54) **COMBINED FOOD COOKING DEVICE AND PROCESS**
KOMBINIERTE NAHRUNGSMITTELZUBEREITUNGSVORRICHTUNG UND -VERFAHREN
DISPOSITIF DE CUISSON D'ALIMENTS COMBINÉ ET PROCÉDÉ ASSOCIÉ

(30) Priority: 18.05.2005 IT MI20050905
(43) Date of publication of application: 20.02.2008
(73) Proprietor: De'Longhi SpA, 31100 Treviso (IT)
(72) Inventor: DE'LONGHI, Giuseppe, I-31100 Treviso (IT)
(74) Representative: Rapisardi, Mariacristina
(86) International application number: PCT/EP2006/003979
(87) International publication number: WO 2006/122643

(56) References cited:
- EP-A- 1 396 219
- DE-A1- 1 905 004
- DE-A1- 3 235 985
- DE-U1- 29 622 986
- FR-A- 2 712 793

## Description

The present invention relates to a combined food cooking device and process.

Combined food cooking devices are available on the market, exhibiting a frame that fixedly supports a lower cooking top exhibiting a cooking grill and an upper cooking top exhibiting a cooking plate, and an electrical resistor that irradiates thermal energy upwards towards the upper cooking top and downwards, towards the lower cooking top.

Less fatty food is usually cooked on the upper cooking plate whereas fatter food or food containing more liquids is cooked on the lower grill.

The advantage of such devices consists in the limitation of the smoke production, since the cooking liquids of the cooked food in the lower cooking top do not meet hot or incandescent surfaces.

However, such known devices exhibit some disadvantages, among which excessive overall dimensions, which make transport and storage thereof, when not used, difficult.

Moreover, such devices exhibit poor versatility to adapt to the cooking of different foods and to change the cooking conditions.

Last but not least, such devices often are not capable of preventing the formation of smoke from the cooking liquids drained from foods cooked on the upper cooking top.

EP-A-1 396 219 discloses a cooking device according to preamble of claim 1.

The technical task of the present invention therefore is to provide a combined food cooking device and process which should allow eliminating the above technical disadvantages of the prior art. Within the scope of this technical task, it is an object of the invention to provide a combined food cooking device and process which should minimise the formation of smoke resulting from the contact of the liquids extracted from the foods while cooking with hot surfaces.

Another object of the invention is to provide a combined food cooking device and process which should be adaptable to cooking different foods in a versatile manner and which should offer different usage conditions. Last but not least, another object of the invention is to provide a combined food cooking device and process which should be efficient, practical, safe and at the same time, economical. The technical task, as well as these and other objects, according to the present invention are achieved by providing a combined food cooking device according to claim 1.

The present invention also discloses a combined food cooking process by a cooking device having at least one upper cooking top and one lower cooking top, characterised in that it consists in the steps of moving said upper cooking top away from the base of said device until the usage position thereof is obtained, concurrently cooking the foods present on said upper cooking top by thermal energy conduction from the bottom and the foods present on said lower cooking top by irradiation of thermal energy from the top, and collecting the cooking liquids coming from both said upper cooking top and said lower cooking top below said lower cooking top.

Further features of the present invention, moreover, are defined in the following claims.

Further features and advantages of the invention will appear more clearly from the description of a preferred but non-exclusive embodiment of the combined food cooking device and process according to the finding, illustrated by way of a non-limiting example in the annexed drawings, wherein:
figure 1 shows a perspective view of a first preferred way of making a device according to the present invention in a usage configuration, wherein for convenience, a side of the frame is shown open;
figure 2 shows a perspective view of the cooking device of figure 1, in the reduced overall dimensions configuration;

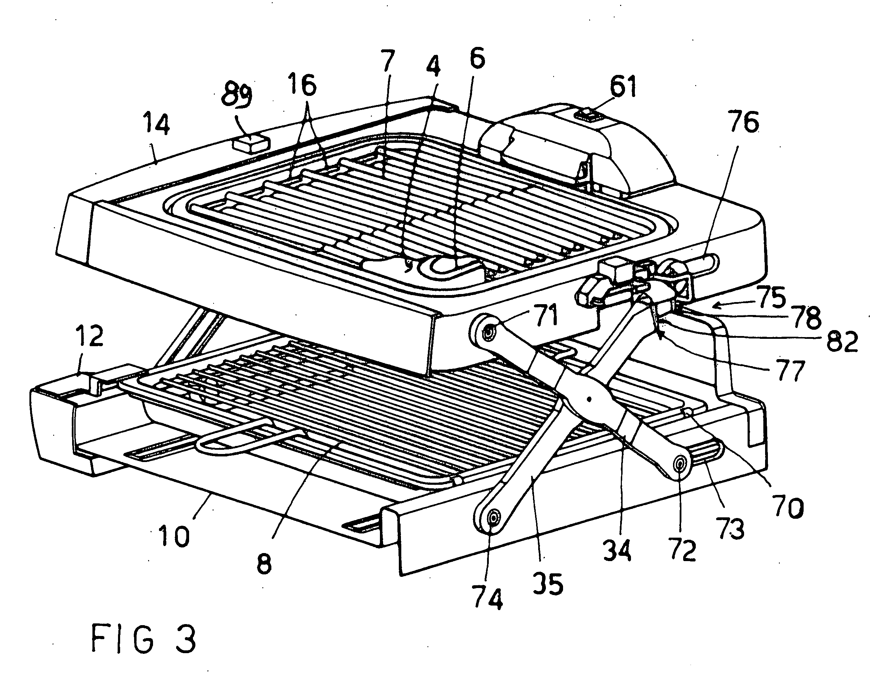

figure 3 shows a perspective view of a second preferred way of making a device in usage configuration, illustrated with the removed sides, according to the present invention;

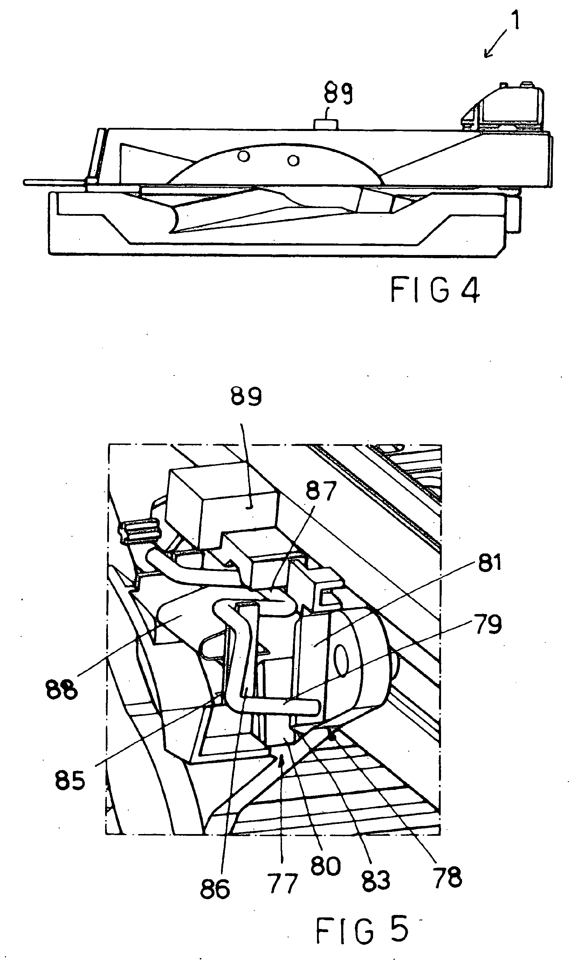

figure 4 shows a perspective view of the cooking device of figure 3, in the reduced overall dimensions configuration; and
figure 5 shows a detail of the device of figure 3.

Equivalent portions of the two embodiments are indicated hereinafter by the same reference numerals.

With reference to the figures mentioned above, there is shown a combined food cooking device globally indicated with reference numeral 1.

Device 1 exhibits at least one upper cooking top 2, a lower cooking top 3, and heating means 4 for the upper 2 and lower 3 cooking tops. Advantageously, device 1 exhibits a structure switching from a reduced overall dimensions configuration wherein the upper cooking top 2 is adjacent the base of device 1 and at least one usage configuration wherein the upper cooking top 2 is far away from the base of device 1.

The heating means 4 is adjacent the bottom side of the upper top 2, and they preferably comprise an irradiating electrical resistor 6.

The upper top 2 exhibits a cooking plate 7 whereas the lower top 3 exhibits a grill 8 arranged inside a cooking liquid collecting tray 9.

Device 1 comprises a frame that preferably exhibits a base 10, a back 11, two sides 12, and a support 14 common for plate 7 and the heating means 4. The common support 14 carries the starting switch 61 that enables the electrical powering of the heating means 4. The thermal power delivered by device 1 may be constant and equal to the maximum allowed, or adjustable by on/off cycles of switch 61, piloted by a special thermostat that senses the temperature in a suitable point of device 1. The common support 14 exhibits a window 15, through which plate 7 and the heating means 4 are arranged, which directly exposes both plate 7 and grill 8 to the heating means 4.

Plate 7 perimetrically exhibits drainage holes 16 for the cooking liquids.

In the usage configuration, the vertical projection of the drainage holes 16 is contained inside the collecting tray 9 in peripheral position.

Plate 7 further exhibits an inclination for favouring the drainage of the cooking liquids towards the drainage holes 16.

By way of an example, the drainage holes 16 concern the sides of plate 7 which consists of two half portions slightly degrading from the centre to the sides where the drainage holes 16 are located.

The cooking device 1 exhibits means 17 for adjusting the relative position between the upper 2 and lower 3 cooking top.

With reference to the embodiments described, the adjustment means 17 can make a discrete adjustment of the relative position between the upper 2 and lower 3 cooking top or, in different embodiments, not illustrated, a continuous adjustment of the relative position between the upper 2 and lower 3 cooking top.

Advantageously, the adjustment means 17 also carries out the switching of device 1 from the reduced overall dimension configuration to the usage one.

The cooking device 1 further exhibits first means 18 for supporting and guiding the lower cooking top 3 between a retracted position inside the shape of device 1 for carrying out the cooking, and a position of at least partial extraction external to the shape of device 1 for loading/removing the foods and/or the liquids present in the collecting tray 9.

The support and guide means 18 is arranged between sides 12 of the frame of device 1 and the sides of the collecting tray 9.

In particular, the support and guide means 18 comprises longitudinal slots 25 obtained on the internal side of sides 12 of the frame of device 1, wherein the bent edges 26 of the sides of the collecting tray 9 slide.

There is further provided means 19 for stopping the lower cooking top at the partial extraction position.

The only partial extraction of the lower cooking top 3 allows keeping device 1 in steady balance, limiting the overturning moment of device 1 which originates when the lower cooking top 3 is extracted, and at the same time prevents the operator from spilling over the liquids contained in the collecting tray 9.

Of course, the lower cooking top 3, in case of need, is fully removable from device 1.

To consolidate the steady balance of device 1, the distribution of volumes and weights is selected in optimum manner.

For example, the depth from the front to the back is increased and the barycentre is moved backwards.

The collecting tray 9 exhibits breakwater means (not shown), more precisely comprising a ribbing of the bottom of the collecting tray 9 which develops in a direction transversal to that of extraction of the collecting tray 9 itself.

In a preferred solution, sides 12 of the frame are internally hollow and exhibit closable opening means (not shown) for seating sundry items therein, such as forks or rolls of paper, of aluminium and/or plastic films for food.

In different embodiments, the frame of device 1 may exhibit, for example at the back, hooks or similar accessories for supporting forks or something else.

The opening means may be of any known type, for example sides 12 may exhibit ports for accessing therein.

Sides 12 of the frame also exhibit handles 60 for carrying device 1.

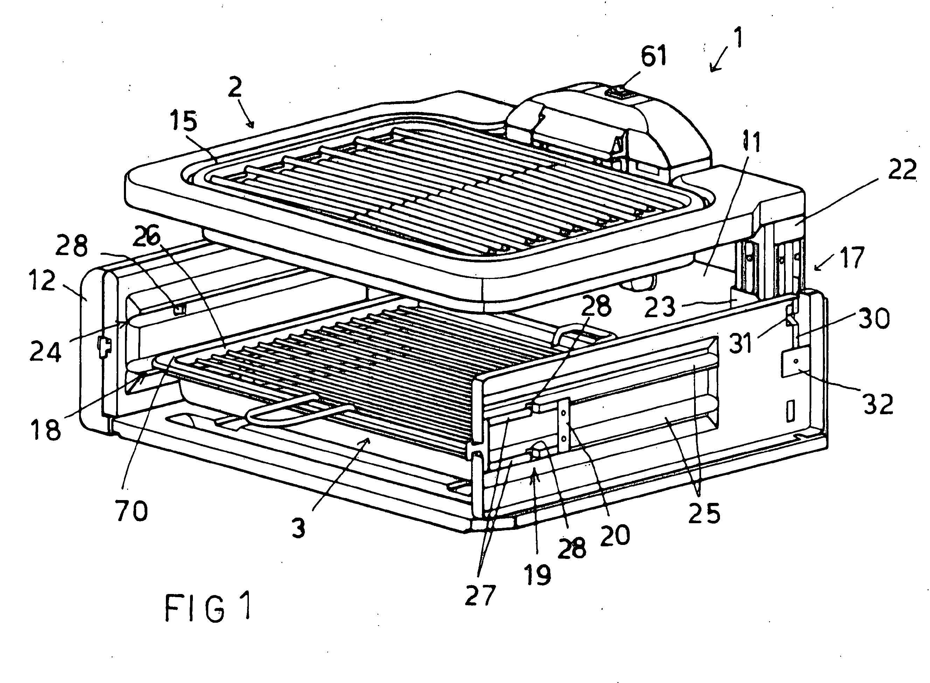

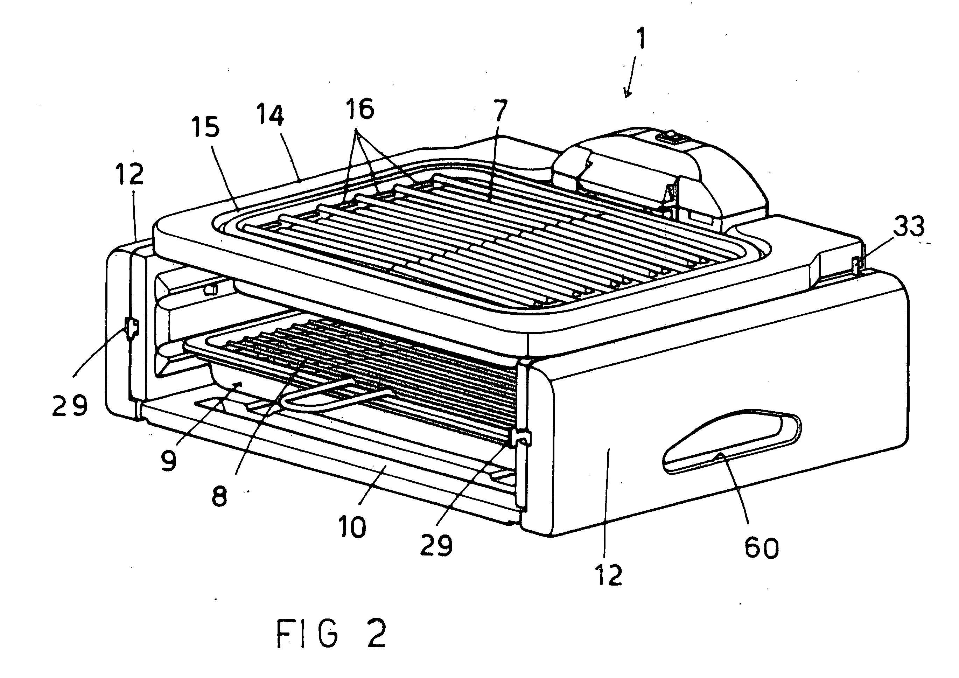

Let's now make more detailed reference to the first preferred embodiment of device 1, illustrated in figures 1 and 2.

The adjustment means 17 comprise a telescopic handling system reversible upwards of the upper cooking top 2.

The telescopic system comprises at least one first guiding profile 22, in particular a pair of first sliding profiles 22 connected to the common support 14 and slidingly engaged with at least a second guiding profile 23, in particular a pair of second sliding profiles 23 carried by the frame of device 1.

The telescopic system is arranged, for example, on the rear side of device 1.

The cooking device 1 in this case exhibits second means 24 for supporting and guiding the lower cooking top 3 between a retracted position inside the shape of device 1 for carrying out the cooking, and a position of at least partial extraction external to the shape of the device for loading/removing the foods and/or the liquids present in the collecting tray 9.

The second support and guide means 24 is arranged at a different height relative to the first support and guide means 18 so as to differentiate the positioning height of the lower cooking top 3 from the latter. The stopping means 19 in this case comprise at least a first flexible snapping lever 27, in particular a pair of first snapping levers, exhibiting projections 28 that project in the longitudinal slots 25 with a contact pressure against the bent edges 26 of the sides of the collecting tray 9, and the bent edges 26 of the sides of the collecting tray 9 in turn have relieves 70 of a shape conjugate to projections 28 with which they removably engage when the partial extraction position of the lower cooking top 3 is reached.

The first snapping levers 27 are made of harmonic steel and are preferably fixed longitudinally and internally to sides 12 of the frame of device 1 and exhibit manual actuation grips 29 that frontally protrude from sides 12.

More precisely, the first snapping levers 27 are fixed at an end thereof to a plate 20 stiffly connected to side 12 and bend in the horizontal plane for moving projections 28 between the engagement and disengagement position with the relieves 70 of the sides of the collecting tray 9.

The telescopic system comprises at least a second flexible lever, and in particular a pair of second snapping locking levers 30 exhibiting projections 31 that project with a contact pressure against the first sliding profiles 22 in turn having at least first relieves (not shown) of a shape conjugate to projections 31 with which they removably engage at the desired position locking height of the upper cooking top 2.

Also the second snapping levers 30 are made of harmonic steel and are preferably fixed internally and transversally to sides 12 of the frame of device 1 and exhibit manual actuation grips 33 that protrude from the tops of sides 12 themselves.

More precisely, the second snapping levers 30 are fixed at an end thereof to a plate 32 stiffly connected to side 12 and bend in the vertical plane for moving projections 31 between the engagement and disengagement position with the relieves of the first sliding profiles 22.

Let's now make more detailed reference to the second preferred embodiment of device 1, illustrated in the remaining figures.

The adjustment means 17 now comprise a pantograph handling system reversible upwards of the upper cooking top 2.

The pantograph system comprises two pairs of crossed arms 34 and 35 that connect sides 12 of the frame of device 1 to the sides of the common support 14.

The crossed arms 34 and respectively 35 are hinged to one another at the crossing point and exhibit the first 34 an end 71 hinged to a side of the common support 14 and an end 72 slidingly engaged in a slot 73 which linearly develops along a side of the frame of device 1, and the second 35 an end 74 hinged to a side of the frame of device 1, and an end 75 slidingly engaged in a slot 76 which linearly develops along a side of the common support 14.

More precisely, the back ends 72 and 75 of the crossed arms 34 and 35 slide into the respective slots 73 and 76.

One of the arms, in particular arm 35, comprises a first and at least a second intercepting cam 77 and 78 of a locking member 79 of device 1 in a first and at least a second usage configuration.

Each intercepting cam 77 and 78 faces the locking member 79 with an inclined sliding profile 80 and 81 when device 1 is in reduced overall dimensions configuration, and a step-wise stopping profile 82 and 83 when device 1 is in extreme usage configuration.

The locking member 79 therefore is operative only unilaterally, that is to say, only when device 1 moves to the reduced overall dimensions configuration.

The number of intercepting cams of course depends on the number of intermediate cooking positions desired for the upper cooking top 3, and may also differ from that shown.

Preferably, an intercepting cam of the same type described above is present and operative at the reduced overall dimension configuration for locking device 1.

The locking member 79 belongs to a more complex release lever 85 which must be actuated, when switching through each intermediate usage configuration, when device 1 is to be returned to the reduced overall dimensions configuration, and in any case every time device 1 is to be switched to a usage configuration closer to the reduced overall dimensions configuration.

The release lever 85, horizontally pivoted supported by a shoulder 86, is provided with a movement gripping portion 87 acting in contrast and by the action of elastic means 88, for example a flat spring, against a release button 89.

To release device 1, the release button 89 is pressed and, overcoming the reaction of spring 88 which compresses, actuates the release lever 85 which moves the locking member 79 releasing it from the step-wise stopping profile 82 or 83. Then, with the release button 89 still pressed, device 1 is switched to the reduced overall dimensions configuration so that the locking member 79 passes over the step-wise stopping profile 82 or 83.

When the release button 89 is released, spring 88 expands, thus returning the locking member 79 to the original position thereof.

To ensure a construction that moves symmetrically, preferably both sides of device 1 exhibit release buttons 89 connected by synchronisation means that makes them integral so as to enable the release only when both are simultaneously pressed.

The combined food cooking process consists in the steps of moving the upper cooking top 2 away from the base of device 1 until the usage position thereof is achieved, concurrently cooking the foods present on the upper cooking top 2 by thermal energy conduction from the bottom and the foods present on the lower cooking top 3 by thermal energy irradiation from the top, and collecting the cooking liquids coming from both the upper cooking top 2 and the lower cooking top 3 below the lower cooking top 3.

The plate of the upper cooking top 2 preferably exhibits reflecting properties suitable for absorbing a portion of the incident thermal radiation for cooking the foods present thereon, and reflecting an optimum portion of the incident thermal radiation that adds to the thermal radiation directed on the lower cooking top 3.

It should be noted that since the foods on the upper cooking top 2 are placed in direct contact with the plate, they lose cooking liquids immediately conveyed towards the drainage holes. In this way, also the production of smoke from the upper cooking top 2 is minimised.

In the practice, the materials used as well as the sizes, can be whatever, according to the technical requirements and to the prior art.

## Claims

1. Combined food cooking device (1) exhibiting at least one upper cooking top (2), a lower cooking top (3) and heating means (4) for said upper and lower cooking tops (2,3) said device (1) exhibiting a structure switching from a reduced overall dimensions configuration wherein said upper cooking top (2) is adjacent the base of said device (1) and at least one usage configuration wherein said upper cooking top (2) is far away from the base of said device (1).
**characterised in that** it comprises a common support (14) for a cooking plate (7) of said upper top (2) and said heating means, said common support (14) exhibiting a window (15) through which said plate (7) and said heating means (4) are arranged, which directly exposes both said plate (7) and a grill (8) of said lower top (3) to said heating means (4).

2. Combined food cooking device (1) according to claim 1, **characterised in that** said heating means (4) is adjacent the bottom side of said upper top (2).

3. Combined food cooking device (1) according to one or more of the previous claims, **characterised in that** said heating (4) comprises at least one electrical resistor (6) irradiating thermal energy.

4. Combined food cooking device (1) according to one or more of the previous claims, **characterised in that** said grill (8) is arranged inside a cooking liquid collecting tray (9).

5. Combined food cooking device (1) according to one or more of the previous claims, **characterised in that** said plate (7) perimetrically exhibits drainage holes (16) for the cooking liquids.

6. Combined food cooking device (1) according to one or more of the previous claims, **characterised in that** in said usage configuration, the vertical projection of said drainage holes (16) is contained inside said collecting tray (9) in peripheral position.

7. Combined food cooking device (1) according to one or more of the previous claims, **characterised in that** said plate (7) exhibits an inclination for favouring the drainage of the cooking liquids towards said drainage holes (16).

8. Combined food cooking device (1) according to one or more of the previous claims, **characterised in that** it exhibits means (17) for adjusting the relative position between said upper and lower cooking tops (2,3).

9. Combined food cooking device (1) according to one or more of the previous claims, **characterised in that** said adjustment means (17) makes a discrete adjustment of the relative position between said upper and lower cooking tops (2,3).

10. Combined food cooking device (1) according to one or more of the previous claims, **characterised in that** said adjustment means (17) makes a continuous adjustment of the relative position between said upper and lower cooking tops (2,3).

11. Combined food cooking device (1) according to one or more of the previous claims, **characterised in that** said adjustment means (17) also carries out the switching of said device (1) from said reduced overall dimensions configuration to said usage configuration.

12. Combined food cooking device (1) according to one or more of the previous claims, **characterised in that** it exhibits at least first means (18) for supporting and guiding said lower cooking top (3) between a retraction position inside the shape of said device (1) for carrying out the cooking, and a position of at least partial extraction external to the shape of said device (1) for loading/removing the foods and/or the liquids present in said collecting tray (9).

13. Combined food cooking device (1) according to one or more of the previous claims, **characterised in that** said at least first support and guide means (18) are present between the sides of the frame of said device (1) and the sides of said collecting tray (9).

14. Combined food cooking device according to one or more of the previous claims, **characterised in that** said at least first support and guide means (18) comprise longitudinal slots (25) obtained on the internal side of said sides (12) of said frame, wherein the bent edges (26) of the sides of said collecting tray (9) slide.

15. Combined food cooking device (1) according to one or more of the previous claims, **characterised in that** it comprises means (19) for stopping said lower cooking top (3) at said partial extraction position.

16. Combined food cooking device (1) according to one or more of the previous claims, **characterised in that** said collecting tray (9) exhibits breakwater means.

17. Combined food cooking device (1) according to one or more of the previous claims, **characterised in that** said breakwater means comprises a ribbing of the bottom of said collecting tray (9) in a direction transversal to that of extraction.

18. Combined food cooking device (1) according to one or more of the previous claims, **characterised in that** said sides (12) of said frame are internally hollow and exhibit closable opening means for seating sundry items therein.

19. Combined food cooking device (1) according to one or more of the previous claims, **characterised in that** said sides (12) of said frame exhibit grips for carrying said device.

20. Combined food cooking device (1) according to one or more of the previous claims, **characterised in that** said adjustment means (17) comprises a telescopic handling system reversible upwards of said upper cooking top (2).

21. Combined food cooking device (1) according to one or more of the previous claims, **characterised in that** said telescopic system comprises at least one first guiding profile (22) connected to said common support (14) and slidingly engaged with a second guiding profile (23) carried by said frame of said device (1).

22. Combined food cooking device (1) according to one or more of the previous claims, **characterised in that** said telescopic system is arranged in the rear portion of said device (1).

23. Combined food cooking device (1) according to one or more of the previous claims, **characterised in that** it exhibits at least second means (24) for supporting and guiding said lower cooking top (3) between a retraction position inside the shape of said device (1) for carrying out the cooking, and a position of at least partial extraction external to the shape of said device (1) for loading/removing the foods and/or the liquids present in said collecting tray (9), said second guide and support means (24) being arranged at a different height relative to said first guide and support means (18) so as to differentiate the positioning height of said lower cooking top (3).

24. Combined food cooking device (1) according to one or more of the previous claims, **characterised in that** said stopping means (19) comprises at least a first flexible snapping lever (27) exhibiting a projection (28) that projects in one of said slots (25) with a contact pressure against said bent edge (26) of one of said sides of said collecting tray (9), said bent edge (26) in turn having a relief (70) of conjugate shape wherein said projection (28) removably engages at said partial extraction position.

25. Combined food cooking device (1) according to one or more of the previous claims, **characterised in that** said first snapping lever (27) is made of harmonic steel.

26. Combined food cooking device (1) according to one or more of the previous claims, **characterised in that** said first snapping lever (27) is fixed internally and longitudinally to a side of said frame and exhibits a manual actuation grip that protrudes frontally therefrom.

27. Combined food cooking device (1) according to one or more of the previous claims, **characterised in that** said telescopic system comprises at least a second flexible snapping locking lever (30) exhibiting a projection (31) that projects with a contact pressure against said first guiding profile (22) in turn having at least one relief of conjugate shape wherein said projection removably engages at the desired position locking height of said upper cooking top (2).

28. Combined food cooking device (1) according to one or more of the previous claims, **characterised in that** said second snapping lever (30) is made of harmonic steel.

29. Combined food cooking device (1) according to one or more of the previous claims, **characterised in that** said second snapping lever (30) is fixed internally and transversally to a side of said frame and exhibits a manual actuation grip that protrudes from the top thereof.

30. Combined food cooking device (1) according to one or more of the previous claims, **characterised in that** said adjustment means (17) comprises a pantograph handling system reversible upwards of said upper cooking top (2).

31. Combined food cooking device (1) according to one or more of the previous claims, **characterised in that** said pantograph system comprises two pairs of crossed arms (34,35) that connect the sides (12) of said frame to the sides of said common support (14).

32. Combined food cooking device (1) according to one or more of the previous claims, **characterised in that** crossed arms (31,35) are hinged to one another at the crossing point and exhibit the one an end (71) hinged to a side of said common support (14) and an end (72) slidingly engaged in a slot (73) which linearly develops along a side of said frame, and the other one an end (74) hinged to a side of said frame and an end (75) slidingly engaged in a SLOT (76) which linearly develops along a side of said common support 14.

33. Combined food cooking device (1) according to one or more of the previous claims, **characterised in that** at least one of the arms comprises a first and at least a second intercepting cam (77,78) of a member (79) for locking said device (1) in a first and at least a second usage configuration.

34. Combined food cooking device (1) according to one or more of the previous claims, **characterised in that** said intercepting cams (77,78) face said locking member (79) with an inclined sliding profile when said device (1) is in a reduced overall dimensions configuration, and a step-wise stopping profile when said device (1) is in the extreme usage configuration.

35. Combined food cooking device (1) according to one or more of the previous claims, **characterised in that** said locking member (79) is a part of a more complex release lever (85) provided with a movement gripping portion acting in contrast and by the action of elastic means against a release button.

36. Combined food cooking process by a cooking device (1) having at least one upper cooking top (2) and one lower cooking top (3), comprising the steps of moving said upper cooking top (2) away from the base of said device (1) until the usage position thereof is obtained, concurrently cooking the foods present on said upper cooking top (2) by thermal energy conduction from the bottom and the foods present on said lower cooking top (3) by irradiation of thermal energy from the top, and **characterized by** collecting the cooking liquids coming from both said upper cooking top (2) and said lower cooking top (3) below said lower cooking top (3).

## Patentansprüche

1. Kombiniertes Gerät zum Kochen von Nahrungsmitteln (1), welches mindestens eine obere Kochabdeckung (2) und eine untere Kochabdeckung (3) sowie ein Heizelement (4) für die besagte obere und untere Kochabdeckung (2,3) aufweist, wobei das besagte Gerät (1) eine Struktur aufweist, die von der Ausführung mit reduzierten Gesamtmaßen, bei welcher die besagte obere Kochabdeckung (2) an die Unterseite des besagten Gerätes (1) angrenzt, zu mindestens einer Gebrauchsausführung wechselt, bei welcher die besagte obere Kochabdeckung (2) weit von der Unterseite des besagten Gerätes (1) entfernt ist; **dadurch gekennzeichnet, dass** es ein einfaches Trägerelement (14) für eine Kochplatte (7) für die besagte obere Kochabdeckung (2) und das besagte Heizelement umfasst, wobei das besagte einfache Trägerelement (14) ein Fenster (15) aufweist, durch welches die besagte Platte (7) und das besagte Heizelement (4) angeordnet werden, und wobei sowohl die besagte Platte (7) als auch ein Bratrost (8) von der besagten unteren Kochabdeckung (3) direkt dem Heizelement (4) ausgesetzt sind. unteren Kochaufsatz (3) gelangen.

2. Kombiniertes Gerät zum Kochen von Nahrungsmitteln (1) nach Anspruch 1, **dadurch gekennzeichnet, dass** das besagte Heizelement (4) an die Unterseite der besagten oberen Abdeckung (2) angrenzt.

3. Kombiniertes Gerät zum Kochen von Nahrungsmitteln (1) nach einem oder mehreren der vorhergehenden Ansprüche, **dadurch gekennzeichnet, dass** das besagte Heizelement (4) mindestens einen elektrischen Widerstand (6) umfasst, der Wärmeenergie ausstrahlt.

4. Kombiniertes Gerät zum Kochen von Nahrungsmitteln (1) nach einem oder mehreren der vorhergehenden Ansprüche, **dadurch gekennzeichnet, dass** der besagte Bratrost (8) innerhalb eines Beckens (9) zum Sammeln der Kochflüssigkeit angebracht wird.

5. Kombiniertes Gerät zum Kochen von Nahrungsmitteln (1) nach einem oder mehreren der vorhergehenden Ansprüche, **dadurch gekennzeichnet, dass** die besagte Platte (7) umlaufende Entwässerungsöffnungen (16) für die Kochflüssigkeiten aufweist.

6. Kombiniertes Gerät zum Kochen von Nahrungsmitteln (1) nach einem oder mehreren der vorhergehenden Ansprüche, **dadurch gekennzeichnet, dass** sich bei der besagten Gebrauchsausführung der senkrechte Vorsprung der besagten Entwässerungsöffnungen (16) innerhalb des besagten Sammelbeckens (9) in einer Randposition befindet.

7. Kombiniertes Gerät zum Kochen von Nahrungsmitteln (1) nach einem oder mehreren der vorhergehenden Ansprüche, **dadurch gekennzeichnet, dass** die besagte Platte (7) eine Neigung aufweist, um den Abfluss der Kochflüssigkeiten zu den besagten Entwässerungsöffnungen (16) zu begünstigen.

8. Kombiniertes Gerät zum Kochen von Nahrungsmitteln (1) nach einem oder mehreren der vorhergehenden Ansprüche, **dadurch gekennzeichnet, dass** es ein Mittel (17) zur Einstellung der entsprechenden Position zwischen dem besagten oberen und unteren Kochaufsatz (2, 3) aufweist.

9. Kombiniertes Gerät zum Kochen von Nahrungsmitteln (1) nach einem oder mehreren der vorhergehenden Ansprüche, **dadurch gekennzeichnet, dass** das besagte Einstellungsmittel (17) eine diskrete Einstellung der entsprechenden Position zwischen dem besagten oberen und unteren Kochaufsatz (2, 3) vornimmt.

10. Kombiniertes Gerät zum Kochen von Nahrungsmitteln (1) nach einem oder mehreren der vorhergehenden Ansprüche, **dadurch gekennzeichnet, dass** das besagte Einstellungsmittel (17) eine ständige Einstellung der entsprechenden Position zwischen dem besagten oberen und unteren Kochaufsatz (2, 3) vornimmt.

11. Kombiniertes Gerät zum Kochen von Nahrungsmitteln (1) nach einem oder mehreren der vorhergehenden Ansprüche, **dadurch gekennzeichnet, dass** das besagte Einstellungsmittel (17) auch den Wechsel des besagten Gerätes (1) von der besagten Ausführung mit reduzierten Gesamtmaßen zur besagten Gebrauchsausführung vollziehen kann.

12. Kombiniertes Gerät zum Kochen von Nahrungsmitteln (1) nach einem oder mehreren der vorhergehenden Ansprüche, **dadurch gekennzeichnet, dass** es mindestens ein erstes Mittel (18) aufweist, das den besagten unteren Kochaufsatz (3) zwischen einer Rückzugsposition innerhalb der Form des besagten Gerätes (1) trägt und führt, um den Kochvorgang zu vollziehen, sowie einer Auszugsposition, die mindestens teilweise außerhalb der Form des besagten Gerätes (1) liegt, um die Nahrungsmittel und/oder die Flüssigkeiten einzugeben/zu entfernen, die sich in dem besagten Sammelbecken (9) befinden.

13. Kombiniertes Gerät zum Kochen von Nahrungsmitteln (1) nach einem oder mehreren der vorhergehenden Ansprüche, **dadurch gekennzeichnet, dass** das besagte erste Mittel zum Tragen und zur Führung (18) sich zwischen den Seitenflächen des Rahmens vom Gerät (1) und den Seitenflächen des besagten Sammelbeckens (9) befindet.

14. Kombiniertes Gerät zum Kochen von Nahrungsmitteln (1) nach einem oder mehreren der vorhergehenden Ansprüche, **dadurch gekennzeichnet, dass** das besagte zumindest erste Mittel (18) zum Tragen und zur Führung längs verlaufende Schlitze (25) umfasst, die an der Innenseite der besagten Seitenflächen (12) des besagten Rahmens gewonnen werden, in der Neigungskanten (26) der Seitenflächen des besagten Sammelbeckens (9) schieben.

15. Kombiniertes Gerät zum Kochen von Nahrungsmitteln (1) nach einem oder mehreren der vorhergehenden Ansprüche, **dadurch gekennzeichnet, dass** es ein Mittel (19) umfasst, das den besagten unteren Kochaufsatz (3) in der besagten teilweisen Auszugsposition abbremst.

16. Kombiniertes Gerät zum Kochen von Nahrungsmitteln (1) nach einem oder mehreren der vorhergehenden Ansprüche, **dadurch gekennzeichnet, dass** das besagte Sammelbecken (9) ein Wellenbrechermittel aufweist.

17. Kombiniertes Gerät zum Kochen von Nahrungsmitteln (1) nach einem oder mehreren der vorhergehenden Ansprüche, **dadurch gekennzeichnet, dass** das besagte Wellenbrechermittel eine Bodenverrippung des besagten Sammelbeckens (9) in quer verlaufender Richtung zu jener für den Auszug umfasst.

18. Kombiniertes Gerät zum Kochen von Nahrungsmitteln (1) nach einem oder mehreren der vorhergehenden Ansprüche, **dadurch gekennzeichnet, dass** die besagten Seitenflächen (12) des besagten Rahmens innen hohl sind und ein verschließbares Öffnungsmittel aufweisen, um verschiedene Gegenstände darin unterzubringen.

19. Kombiniertes Gerät zum Kochen von Nahrungsmitteln (1) nach einem oder mehreren der vorhergehenden Ansprüche, **dadurch gekennzeichnet, dass** die besagten Seitenflächen (12) des besagten Rahmens Griffe aufweisen, um das besagte Gerät zu tragen.

20. Kombiniertes Gerät zum Kochen von Nahrungsmitteln (1) nach einem oder mehreren der vorhergehenden Ansprüche, **dadurch gekennzeichnet, dass** das besagte Einstellungsmittel (17) ein Teleskopbedienungssystem umfasst, das über dem besagten oberen Kochaufsatz (2) umgekehrt werden kann.

21. Kombiniertes Gerät zum Kochen von Nahrungsmitteln (1) nach einem oder mehreren der vorhergehenden Ansprüche, **dadurch gekennzeichnet, dass** das besagte Teleskopsystem mindestens ein erstes Führungsprofil (22) umfasst, das mit dem besagten gemeinsamen Trägerelement (14) verbunden ist und verschiebbar an ein zweites Führungsprofil (23) gekuppelt ist, das durch den besagten Rahmen des besagten Gerätes (1) getragen wird.

22. Kombiniertes Gerät zum Kochen von Nahrungsmitteln (1) nach einem oder mehreren der vorhergehenden Ansprüche, **dadurch gekennzeichnet, dass** das besagte Teleskopsystem am rückwärtigen Abschnitt des besagten Gerätes (1) angeordnet ist.

23. Kombiniertes Gerät zum Kochen von Nahrungsmitteln (1) nach einem oder mehreren der vorhergehenden Ansprüche, **dadurch gekennzeichnet, dass** es mindestens ein zweites Mittel (24) aufweist, das den besagten unteren Kochaufsatz (3) zwischen einer Rückzugsposition innerhalb der Form des besagten Gerätes (1) trägt und führt, um den Kochvorgang zu vollziehen, sowie einer Auszugsposition, die mindestens teilweise außerhalb der Form des besagten Gerätes (1) liegt, um die Nahrungsmittel und/oder die Flüssigkeiten einzugeben/zu entfernen, die sich in dem besagten Sammelbecken (9) befinden, wobei das besagte zweite Mittel (24) auf einer unterschiedlichen Höhe im Verhältnis zum besagten ersten Mittel zum Tragen und zur Führung (18) angeordnet ist, um die Stellhöhe des besagten unteren Kochaufsatzes (3) zu unterteilen.

24. Kombiniertes Gerät zum Kochen von Nahrungsmitteln (1) nach einem oder mehreren der vorhergehenden Ansprüche, **dadurch gekennzeichnet, dass** das besagte Bremsmittel (19) mindestens einen ersten flexiblen Schnapphebel (27) umfasst, der einen Vorsprung (28) aufweist, der in einen der besagten Schlitze (25) durch Kontaktdruck gegen die besagte Neigungskante (26) von einer der beiden Seitenflächen des besagten Sammelbeckens (9) hereinragt, wobei die besagte Neigungskante (26) ihrerseits eine komplementäre Nut (70) besitzt, an den der besagte Vorsprung (28) in der besagten teilweisen Auszugsposition lösbar gekuppelt wird.

25. Kombiniertes Gerät zum Kochen von Nahrungsmitteln (1) nach einem oder mehreren der vorhergehenden Ansprüche, **dadurch gekennzeichnet, dass** der besagte erste Schnapphebel (27) aus harmonischem Stahl erzeugt wurde.

26. Kombiniertes Gerät zum Kochen von Nahrungsmitteln (1) nach einem oder mehreren der vorhergehenden Ansprüche, **dadurch gekennzeichnet, dass** der besagte erste Schnapphebel (27) innen sowie längs verlaufend an einer Seitenfläche des besagten Rahmens befestigt ist und einen handbetätigten Griff aufweist, der frontal von demselben hervorsteht.

27. Kombiniertes Gerät zum Kochen von Nahrungsmitteln (1) nach einem oder mehreren der vorhergehenden Ansprüche, **dadurch gekennzeichnet, dass** das besagte Teleskopsystem mindestens einen zweiten flexiblen sperrenden Schnapphebel (30) umfasst, der einen Vorsprung (31) aufweist, der durch Kontaktdruck gegen das besagte erste Führungsprofil (22) hereinragt, wobei es seinerseits mindestens eine komplementäre Nut besitzt, an den der besagte Vorsprung (28) in der gewünschten Position für die Sperrhöhe der besagten oberen Abdeckung (2) lösbar gekuppelt wird.

28. Kombiniertes Gerät zum Kochen von Nahrungsmitteln (1) nach einem oder mehreren der vorhergehenden Ansprüche, **dadurch gekennzeichnet, dass** der besagte zweite Schnapphebel (30) aus harmonischem Stahl erzeugt wurde.

29. Kombiniertes Gerät zum Kochen von Nahrungsmitteln (1) nach einem oder mehreren der vorhergehenden Ansprüche, **dadurch gekennzeichnet, dass** der besagte zweite Schnapphebel (30) innen sowie längs verlaufend an einer Seitenfläche des besagten Rahmens befestigt ist und einen handbetätigten Griff aufweist, der von dessen Oberteil hervorsteht.

30. Kombiniertes Gerät zum Kochen von Nahrungsmitteln (1) nach einem oder mehreren der vorhergehenden Ansprüche, **dadurch gekennzeichnet, dass** das besagte Einstellungsmittel (17) ein pantographiertes Bedienungssystem umfasst, das über dem besagten oberen Kochaufsatz (2) umgekehrt werden kann.

31. Kombiniertes Gerät zum Kochen von Nahrungsmitteln (1) nach einem oder mehreren der vorhergehenden Ansprüche, **dadurch gekennzeichnet, dass** das besagte pantographiertes System zwei Paare von gekreuzten Armen (34, 35) umfasst, die die Seitenflächen (12) des besagten Rahmens mit den Seitenflächen des besagten einfachen Trägerelementes (14) verbinden.

32. Kombiniertes Gerät zum Kochen von Nahrungsmitteln (1) nach einem oder mehreren der vorhergehenden Ansprüche, **dadurch gekennzeichnet, dass** die gekreuzten Arme (34, 35) durch ein Gelenk am Kreuzpunkt miteinander verbunden sind und einer ein Endstück (71) aufweist, das durch ein Gelenk mit einer Seitenfläche des besagten einfachen Trägerelementes (14) verbunden ist, sowie ein Endstück (72), das verschiebbar an einen Schlitz (73) gekuppelt ist, welcher sich gradlinig entlang einer Seitenfläche des besagten Rahmens erstreckt, und der andere Arm ein Endstück (74) aufweist, das durch ein Gelenk mit einer Seitenfläche des Rahmens verbunden ist, sowie ein Endstück (75), das verschiebbar an einen Schlitz (76) gekuppelt ist, welcher sich gradlinig entlang einer Seitenfläche des besagten einfachen Trägerelementes (14) erstreckt.

33. Kombiniertes Gerät zum Kochen von Nahrungsmitteln (1) nach einem oder mehreren der vorhergehenden Ansprüche, **dadurch gekennzeichnet, dass** mindestens einer der Arme eine erste und mindestens eine zweite Haltenocke (77, 78) eines Elementes (79) umfasst, um das besagte Gerät (1) in einer ersten und mindestens einer zweiten Gebrauchsausführung zu sperren.

34. Kombiniertes Gerät zum Kochen von Nahrungsmitteln (1) nach einem oder mehreren der vorhergehenden Ansprüche, **dadurch gekennzeichnet, dass** die besagten Haltenocken (77, 78) dem besagten Sperrelement (79) mit einem geneigten Schiebeprofil gegenüberliegen, wenn sich das besagte Gerät (1) in einer Ausführung mit reduzierten Gesamtmaßen befindet, sowie mit einem stufenweisen Bremsprofil, wenn das besagte Gerät sich in der extremen Gebrauchsausführung befindet.

35. Kombiniertes Gerät zum Kochen von Nahrungsmitteln (1) nach einem oder mehreren der vorhergehenden Ansprüche, **dadurch gekennzeichnet, dass** das besagte Sperrelement (79) ein Teil von einem komplexeren Betätigungshebel (85) ist, der mit einem bewegungssstoppenden Schnitt ausgestattet ist, der entgegengesetzt dazu und aufgrund der Bewegung eines elastischen Mittels gegen einen Betätigungsknopf arbeitet.

36. Kombiniertes Verfahren zum Kochen von Nahrungsmitteln mit einem Gerät (1), das mindestens einen oberen Kochaufsatz (2) sowie einen unteren Kochaufsatz (3) besitzt, wobei es die Schritte umfasst, den besagten oberen Kochaufsatz (2) vom Unterteil des Gerätes (1) fortzubewegen, bis dessen Gebrauchsausführung erzielt wurde, wobei die Nahrungsmittel, die sich auf dem besagten oberen Kochaufsatz (2) befinden, aufgrund der Leitung von Wärmeenergie vom Unterteil, sowie die Nahrungsmittel, die sich auf dem besagten unteren Kochaufsatz (3) befinden, aufgrund der Strahlung der Wärmeenergie vom Oberteil gleichzeitig gekocht werden, und **dadurch gekennzeichnet ist, dass** die Kochflüssigkeiten gesammelt werden, die sowohl vom besagten oberen Kochaufsatz (2) als auch vom besagten unteren Kochaufsatz (3) unter den besagten unteren Kochaufsatz (3) gelangen.

## Revendications

1. Dispositif combiné de cuisson d'aliments (1) affichant au moins un réchaud supérieur (2), un réchaud inférieur (3) et un moyen de réchauffement (4) pour les réchauds supérieur et inférieur (2, 3) susdits, le dispositif (1) susdit affichant une structure effectuant la commutation depuis une configuration en dimensions globales réduites où le réchaud supérieur (2) susdit est contigu au socle du dispositif (1) susdit et au moins une configuration d'utilisation où le réchaud supérieur (2) susdit est éloigné du socle du dispositif (1) susdit, **caractérisé en ce qu'**il comporte un soutien commun (14) pour une plaque de cuisson (7) du réchaud supérieur (2) susdit et du moyen de réchauffement susdit, le soutien commun (14) susdit affichant une fenêtre (15), par le biais de laquelle la plaque (7) susdite et le moyen de réchauffement (4) susdit sont aménagés, qui expose directement aussi bien la plaque (7) susdite et un grilloir (8) du réchaud inférieur (3) susdit au moyen de réchauffement (4) susdit.

2. Dispositif combiné de cuisson d'aliments (1) selon la revendication 1, **caractérisé en ce que** ledit moyen de réchauffement (4) est contigu au côté inférieur dudit réchaud supérieur (2).

3. Dispositif combiné de cuisson d'aliments (1) selon l'une ou plusieurs des revendications précédentes, **caractérisé en ce que** ledit moyen de réchauffement (4) comporte au moins une résistance électrique (6) diffusant de l'énergie thermique.

4. Dispositif combiné de cuisson d'aliments (1) selon l'une ou plusieurs des revendications précédentes, **caractérisé en ce que** ledit grilloir (8) est aménagé à l'intérieur d'un plateau de collecte des liquides de cuisson (9).

5. Dispositif combiné de cuisson d'aliments (1) selon l'une ou plusieurs des revendications précédentes, **caractérisé en ce que** ladite plaque (7) présente périmétriquement des trous d'écoulement (16) pour les liquides de cuisson.

6. Dispositif combiné de cuisson d'aliments (1) selon l'une ou plusieurs des revendications précédentes, **caractérisé en ce que** dans ladite configuration d'utilisation, la projection verticale desdits trous d'écoulement (16) est contenue à l'intérieur dudit plateau de collecte (9) dans sa position périphérique.

7. Dispositif combiné de cuisson d'aliments (1) selon l'une ou plusieurs des revendications précédentes, **caractérisé en ce que** ladite plaque (7) présente une inclinaison pour favoriser le drainage des liquides de cuisson vers lesdits trous d'écoulement (16).

8. Dispositif combiné de cuisson d'aliments (1) selon l'une ou plusieurs des revendications précédentes, **caractérisé en ce qu'**il présenter un moyen d'ajustage (17) de la position relative entre lesdits réchauds supérieur et inférieur (2, 3).

9. Dispositif combiné de cuisson d'aliments (1) selon l'une ou plusieurs des revendications précédentes, **caractérisé en ce que** ledit moyen d'ajustage (17) effectue un ajustage discontinu de la position relative entre lesdits réchauds supérieur et inférieur (2, 3).

10. Dispositif combiné de cuisson d'aliments (1) selon l'une ou plusieurs des revendications précédentes, **caractérisé en ce que** ledit moyen d'ajustage (17) effectue un ajustage continu de la position relative entre lesdits réchauds supérieur et inférieur (2, 3).

11. Dispositif combiné de cuisson d'aliments (1) selon l'une ou plusieurs des revendications précédentes, **caractérisé en ce que** ledit moyen d'ajustage (17) effectue aussi la commutation dudit dispositif (1) de ladite configuration en dimensions globales réduites à ladite configuration d'utilisation.

12. Dispositif combiné de cuisson d'aliments (1) selon l'une ou plusieurs des revendications précédentes, **caractérisé en ce qu'**il présente au moins un premier moyen (18) de soutien et de guidage dudit réchaud inférieur (3) entre une position de rétraction à l'intérieur de la structure dudit dispositif (1) pour l'exécution de la cuisson, et une position d'au moins une extraction partielle à l'extérieur de la structure dudit dispositif (1) pour charger/enlever les aliments et/ou les liquides présents dans ledit plateau de collecte (9).

13. Dispositif combiné de cuisson d'aliments (1) selon l'une ou plusieurs des revendications précédentes, **caractérisé en ce que** lesdits au moins premiers moyens de soutien et de guidage (18) sont présents entre les côtés dudit bâti du dispositif (1) et les côtés dudit plateau de collecte (9).

14. Dispositif combiné de cuisson d'aliments selon l'une ou plusieurs des revendications précédentes, **caractérisé en ce que** lesdits au moins premiers moyens de soutien et de guidage (18) comportent des fentes longitudinales (25) obtenues sur le côté intérieur desdits côtés (12) dudit bâti, où les bords inclinés (26) des côtés dudit plateau de collecte (9) coulissent.

15. Dispositif combiné de cuisson d'aliments (1) selon l'une ou plusieurs des revendications précédentes, **caractérisé en ce qu'**il comporte des moyens d'arrêt (19) dudit réchaud inférieur (3) dans ladite position d'extraction partielle.

16. Dispositif combiné de cuisson d'aliments (1) selon l'une ou plusieurs des revendications précédentes, **caractérisé en ce que** ledit plateau de collecte (9) présente des moyens d'endiguement.

17. Dispositif combiné de cuisson d'aliments (1) selon l'une ou plusieurs des revendications précédentes, **caractérisé en ce que** lesdits moyen d'endiguement comportent une nervure du fond dudit plateau de collecte (9) dans un sens transversal par rapport à celui d'extraction.

18. Dispositif combiné de cuisson d'aliments (1) selon l'une ou plusieurs des revendications précédentes, **caractérisé en ce que** lesdits côtés (12) dudit bâti sont intérieurement creux et qu'ils présentent des moyens d'ouverture fermables pour y agencer des produits divers.

19. Dispositif combiné de cuisson d'aliments (1) selon l'une ou plusieurs des revendications précédentes, **caractérisé en ce que** lesdits côtés (12) dudit bâti présentent des poignées pour le transport dudit dispositif.

20. Dispositif combiné de cuisson d'aliments (1) selon l'une ou plusieurs des revendications précédentes, **caractérisé en ce que** lesdits moyens d'ajustage (17) comportent un système de manipulation télescopique réversible en haut dudit réchaud supérieur (2).

21. Dispositif combiné de cuisson d'aliments (1) selon l'une ou plusieurs des revendications précédentes, **caractérisé en ce que** ledit système télescopique comporte au moins un premier profil de guidage (22) relié audit soutien commun (14) et emboîté de façon coulissante avec un second profil de guidage (23) soutenu par ledit bâti dudit dispositif (1).

22. Dispositif combiné de cuisson d'aliments (1) selon l'une ou plusieurs des revendications précédentes, **caractérisé en ce que** ledit système télescopique est aménagé dans la portion arrière dudit dispositif (1).

23. Dispositif combiné de cuisson d'aliments (1) selon l'une ou plusieurs des revendications précédentes, **caractérisé en ce qu'**il présente au moins des seconds moyens (24) de soutien et de guidage dudit réchaud inférieur (3) entre une position de rétraction à l'intérieur de la structure dudit dispositif (1) pour l'exécution de la cuisson, et une position d'au moins une extraction partielle à l'extérieur de la structure dudit dispositif (1) pour charger/enlever les aliments et/ou les liquides présents dans ledit plateau de collecte (9), lesdits seconds moyens de guidage et de soutien (24) étant aménagés à une hauteur autre que celle desdits premiers moyens de guidage et de soutien (18) de façon à différencier la hauteur de positionnement dudit réchaud inférieur (3).

24. Dispositif combiné de cuisson d'aliments (1) selon l'une ou plusieurs des revendications précédentes, **caractérisé en ce que** lesdits moyens d'arrêt (19) comportent au moins un premier levier à ressort flexible (27) présentant une projection (28) qui se projette dans l'une desdites fentes (25) avec une pression de contact contre ledit bord incliné (26) e l'un desdits côtés dudit plateau de collecte (9), ledit bord incliné (26) ayant à son tour un entaille (70) d'une structure conjuguée où ladite projection (28) s'emboîte amoviblement dans ladite position d'extraction partielle.

25. Dispositif combiné de cuisson d'aliments (1) selon l'une ou plusieurs des revendications précédentes, **caractérisé en ce que** ledit premier levier à ressort (27) est réalisé en acier harmonique.

26. Dispositif combiné de cuisson d'aliments (1) selon l'une ou plusieurs des revendications précédentes, **caractérisé en ce que** ledit premier levier à ressort (27) est fixé intérieurement et longitudinalement à un côté dudit bâti et qu'il présente une poignée d'actionnement manuel qui en saillit frontalement.

27. Dispositif combiné de cuisson d'aliments (1) selon l'une ou plusieurs des revendications précédentes, **caractérisé en ce que** ledit système télescopique comporte au moins un second levier de verrouillage à ressort flexible (30) présentant une projection (31) qui se projette avec une pression de contact contre ledit premier profil de guidage (22) ayant à son tour au moins un entaille de structure conjuguée où ladite projection susdite s'emboîte amoviblement à la hauteur de verrouillage de la position souhaitée dudit réchaud supérieur (2).

28. Dispositif combiné de cuisson d'aliments (1) selon l'une ou plusieurs des revendications précédentes, **caractérisé en ce que** ledit second levier à ressort (30) est réalisé en acier harmonique.

29. Dispositif combiné de cuisson d'aliments (1) selon l'une ou plusieurs des revendications précédentes, **caractérisé en ce que** ledit second levier à ressort (30) est fixé intérieurement et transversalement à l'un des côtés dudit bâti et qu'il présente une poignée d'actionnement manuel qui saillit de son sommet.

30. Dispositif combiné de cuisson d'aliments (1) selon l'une ou plusieurs des revendications précédentes, **caractérisé en ce que** lesdits moyens d'ajustage (17) comportent un système de manipulation par pantographie réversible en haut dudit réchaud supérieur (2).

31. Dispositif combiné de cuisson d'aliments (1) selon l'une ou plusieurs des revendications précédentes, **caractérisé en ce que** ledit système par pantographie comporte deux paires de bras croisés (34, 35) qui relient les côtés (12) dudit bâti t aux côtés dudit soutien commun (14).

32. Dispositif combiné de cuisson d'aliments (1) selon l'une ou plusieurs des revendications précédentes, **caractérisé en ce que** le bras croisés (34, 35) sont articulés les uns aux autres au point de croisement et qu'ils présentent l'un une extrémité (71) articulée à l'un des côtés dudit soutien commun (14) et une extrémité (72) emboîtée de façon coulissante dans une fente (73) qui se développe linéairement le long d'un des côtés dudit bâti, et l'autre une extrémité (74) articulée à l'un des côtés dudit bâti et une extrémité (75) emboîtée de façon coulissante dans une fente (76) qui se développe linéairement le long d'un des côtés dudit soutien commun (14).

33. Dispositif combiné de cuisson d'aliments (1) selon l'une ou plusieurs des revendications précédentes, **caractérisé en ce qu'**au moins l'un des bras comporte une première et au moins une seconde came d'interception (77, 78) d'un membre (79) pour le verrouillage dudit dispositif (1) dans une première et au moins une seconde configuration d'utilisation.

34. Dispositif combiné de cuisson d'aliments (1) selon l'une ou plusieurs des revendications précédentes, **caractérisé en ce que** lesdites cames d'interception (77, 78) se trouvent vis-à-vis dudit membre de verrouillage (79) avec un profil de coulissement incliné lorsque ledit dispositif (1) est dans sa configuration en dimensions globales réduites, et un profil d'arrêt pas à pas lorsque ledit dispositif (1) est dans sa configuration d'utilisation extrême.

35. Dispositif combiné de cuisson d'aliments (1) selon l'une ou plusieurs des revendications précédentes, **caractérisé en ce que** ledit membre de verrouillage (79) est un élément d'un levier de dégagement (85) plus sophistiqué réalisé avec une portion de prise de mouvement agissant en opposition et sous l'effet des moyens élastiques contre un bouton de déverrouillage.

36. Processus de cuisson combiné d'aliments par un dispositif de cuisson (1) ayant au moins un réchaud supérieur (2) et un réchaud inférieur (3) comportant les étapes d'éloigner ledit réchaud supérieur (2) du socle dudit dispositif (1) tant que la position d'utilisation de celui-ci n'est pas obtenue, de laisser cuire simultanément les aliments présents sur ledit réchaud supérieur (2) par conduction d'énergie thermique depuis le fond et les aliments présents sur ledit réchaud inférieur (3) par diffusion d'énergie thermique depuis le sommet, et **caractérisé par** la collecte des liquides de cuisson en provenance aussi bien dudit réchaud supérieur (2) que dudit réchaud inférieur (3) au-dessous dudit réchaud inférieur (3).
